# EUROPEAN PATENT SPECIFICATION

(11) **EP 2 693 428 B1**
(45) Date of publication and mention of the grant of the patent: **01.05.2019**
(21) Application number: 11862358.6
(22) Date of filing: 30.09.2011
(51) Int. Cl.: G10K 15/02, G06F 13/00

(54) **NETWORK AV RECEIVER DEVICE**
AV-EMPFÄNGER FÜR EIN NETZWERK
DISPOSITIF RÉCEPTEUR AV DE RÉSEAU

(30) Priority: 31.03.2011 JP 2011077056
(43) Date of publication of application: 05.02.2014
(73) Proprietor: D&M Holdings, Inc., Kawasaki-shi, Kanagawa 210-8569 (JP)
(72) Inventor: IMAHAMA, Yoshiharu, Shirakawa-shi Fukushima 961-0838 (JP)
(74) Representative: Mewburn Ellis LLP
(86) International application number: PCT/JP2011/072511
(87) International publication number: WO 2012/132065

(56) References cited:
- WO-A2-02/067537
- JP-A- 2000 099 435
- JP-A- 2000 099 435
- JP-A- 2005 122 664
- JP-A- 2005 122 664
- US-A1- 2003 126 974

## Description

### Technical Field

The present invention relates to a network AV receiver device that reproduces music recorded in a media server via a network .

### Background Art

A network AV system is now in widespread use, which inputs the music accumulated in a media server connected by a network to an individual personal computer or AV equipment via the network and reproduces the music (for example, see Patent Literature 1). In such a network AV system, there is known a network AV receiver device which connects the music input via the network to an AV receiver device without using the personal computer and reproduces the music by the AV receiver.

Such a network AV system using the conventional media server and network AV receiver device includes the AV receiver device as client equipment which is connected via a local area network (LAN) to a plurality of media servers that accumulate many music files. The AV receiver device as the client equipment requests for the music desired to be reproduced from an arbitrary media server, and in response to this request, the media server transmits the requested music to the client equipment. The client equipment inputs and reproduces the music transmitted from the media server.

### Citation List

### Patent Literature

[PTL 1] JP 2005-31494 A

JP2000 099435 discloses a server switching device, its method and a recording mudium recording server switching program.

US20030126974 discloses a contents reproduction system and process.

WO02/067537 discloses a data streaming system subsituting local content for unicasts. JP2005122664 discloses an audio data recording deivce, an audio data reproducing device, an audio data recording and reproducing device, an audio data recording method, an audio data reproducing method and an audio data recording and reproducing method.

### Summary of Invention

### Technical Problem

In the network AV system using the conventional network AV receiver device, a connection failure of the network may occur due to various causes while inputting and reproducing the music from an arbitrary media server connected to the network. When the connection failure of the network occurs in this way while the network AV receiver device is inputting and reproducing the music from the arbitrary media server, music data cannot be input halfway, and the music being reproduced is suspended.

The conventional network AV receiver device, as described above, temporarily stores music data corresponding to some extent of time previously downloaded via the network in a storage unit in preparation for the connection failure of the network. Even if the network connection failure occurs, it is known that the reproduction of the music is not suspended due to a few network connection failures by continuously reproducing the music temporarily stored in the storage unit during network connection failure. However, for example, when the network failure or a problem of the server itself occurs in the arbitrary media server itself which is inputting the music, the distribution of the music may be perpetually suspended after occurrence of the connection failure . In this way, when the connection is perpetually suspended from the arbitrary media server which is inputting the music, the network AV receiver device terminates the reproduction of the music temporarily stored in the storage unit, and the reproduction of the music is eventually interrupted halfway.

It is an object of the present invention to provide a network AV receiver device capable of preventing suspension of the reproduction of the music when the music cannot be input from a media server which is inputting the music in the network AV receiver device that inputs and reproduces the music accumulated in the media server connected to the network.

### Solution to Problem

According to the invention as claimed in claim 1 of this application, a solution is provided.

According to the embodiment as claimed in claim 3 of this application, the control unit switches the music data while controlling to prevent the reproduction of the music data from being interrupted halfway based on a time code of the music data now being reproduced and a time code of the music data having the same music name as the music name of the music being reproduced.

According to the embodiment as claimed in claim 4 of this application, in the network AV receiver device according to claim 4, the control unit switches the music data while controlling to fade-out the music now being reproduced and fade-in the music having the same tempo as the tempo of the music being reproduced by matching the temp of the music data being reproduced and the tempo of the music data having the same tempo as the tempo of the music being reproduced based on the tempo of the music data now being reproduced and the tempo of the music data having the same tempo as the tempo of the music being reproduced.

### Advantageous Effects of Invention

According to the present invention, it is possible to provide a network AV receiver device capable of preventing suspension of the reproduction of the music when the music cannot be input from the media server which is inputting the music in the network AV receiver device that reproduces the music accumulated in the media server connected to the network.

### Brief Description of Drawings

FIG. 1 is a diagram illustrating a structure connecting a network AV receiver device which is an embodiment of the present invention.
FIG. 2 is a block diagram illustrating a structure of a network AV receiver device 1 (AVR 1) of this embodiment.
FIG. 3 is a diagram showing an example of the content of music information to be stored by a music information storage unit 108.
FIG. 4 is a flowchart illustrating an operation of indicating the music desired to be reproduced by a user and reproducing the indicated music in the AVR 1 of this embodiment.

### Description of Embodiment

An embodiment of the present invention is described with reference to the drawings.

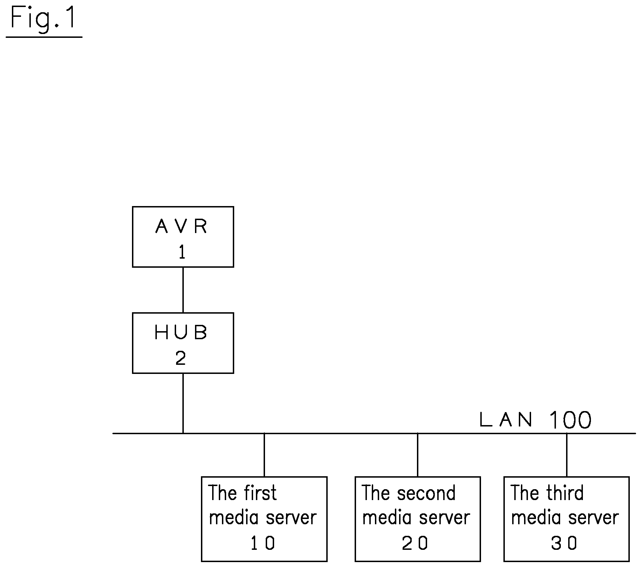

FIG. 1 is a diagram illustrating a structure connecting a network AV receiver device which is an embodiment of the present invention.

As illustrated in FIG. 1, a network AV receiver device 1 (hereinafter referred to as AVR 1) is network-connected to a LAN 100 via a HUB 2. This LAN 100 is connected to a first media server 10, a second media server 20, and a third media server 30.

The HUB 2 receives various data transmitted from each media server connected to the network via the LAN 100, and transmits the various data thus received to the AVR 1 and also transmits the transmission data transmitted from the AVR 1 to each media server. The first media server 10, the second media server 20, and the third media server 30 each accumulate a plurality of music data, and transmit music data requested from among the accumulated music data in response to a request from each network AV receiver device which is connected to the network via the LAN 100.

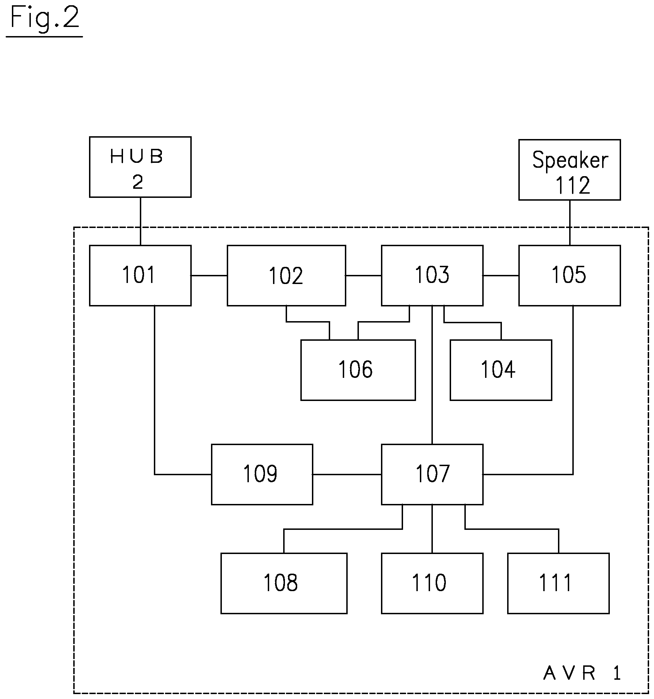

FIG. 2 is a block diagram illustrating a structure of the network AV receiver device 1 (AVR 1) of this embodiment.

The AVR 1 includes an input-output unit 101, a music detection unit 102, a music extraction unit 103, a storage unit 104, a reproduction unit 105, an input state detection unit 106, a control unit 107, a music information storage unit 108, an input instruction unit 109, an operation unit 110, and a display unit 111.

The input-output unit 101 is connected to the HUB 2, and inputs data transmitted from each media server connected to the network through the LAN 100 via the HUB 2, and further, outputs instruction data requesting for the transmission of the music via the HUB 2 to each media server connected to the network by the LAN 100 from the AVR 1.

The music detection unit 102 detects data regarding the music from among the data input by the input-output unit 101. The music extraction unit 103 extracts the music data and music information from the data regarding the music detected by the music detection unit 102. The storage unit 104 stores the music data extracted by the music extraction unit 103. The reproduction unit 105 reproduces the music data stored in the storage unit 104. The reproduction unit 105 is connected to a speaker 112 and converts the reproduced music data into a musical signal, and amplifies and outputs this musical signal to the speaker 112. The speaker 112 emits sound by the musical signal input from the reproduction unit 105.

The input state detection unit 106 detects an input state of the music data which is detected by the music detection unit 102 and extracted by the music extraction unit 103. The control unit 107 all-inclusively controls respective components constructing the AVR 1, such as the music detection unit 102, the music extraction unit 103, and the reproduction unit 105.

The music information storage unit 108 stores the music information extracted by the music extraction unit 103 by the control of the control unit 107. The operation unit 110 outputs an operation instruction signal to the control unit 107 inresponse to the operation from a user. The control unit 107 instructs the input instruction unit 109 to input the music data in response to the operation instruction signal input from the operation unit 110. Further, the control unit 107 monitors an input state of the music data detected by the input state detection unit 106, and controls so as to instruct the input instruction unit 109 to indicate an input destination of the music data and a type of the music data as may be necessary. The input instruction unit 109 indicates the input destination of the music data and the type of the music data to the input-output unit 101 based on the control of the control unit 107. The display unit 111 displays the music information stored in the music information storage unit 108 and also displays the content operated and indicated by the operation unit 110.

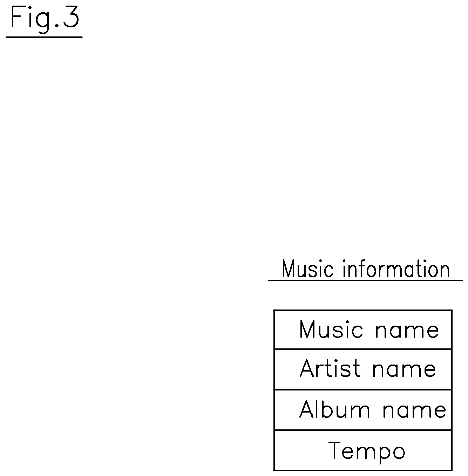

FIG. 3 is a diagram showing an example of the content of the music information stored by the music information storage unit 108.

The music information storage unit 108 extracts various pieces of information regarding the music from among the music information extracted by the music extraction unit 103, and stores information of the music for each media server which is the transmission destination. The music information storage unit 108 stores a music name, an artist name, an album name, and a tempo of the relevant music as shown in FIG. 3 from among the music information extracted by the music extraction unit 103.

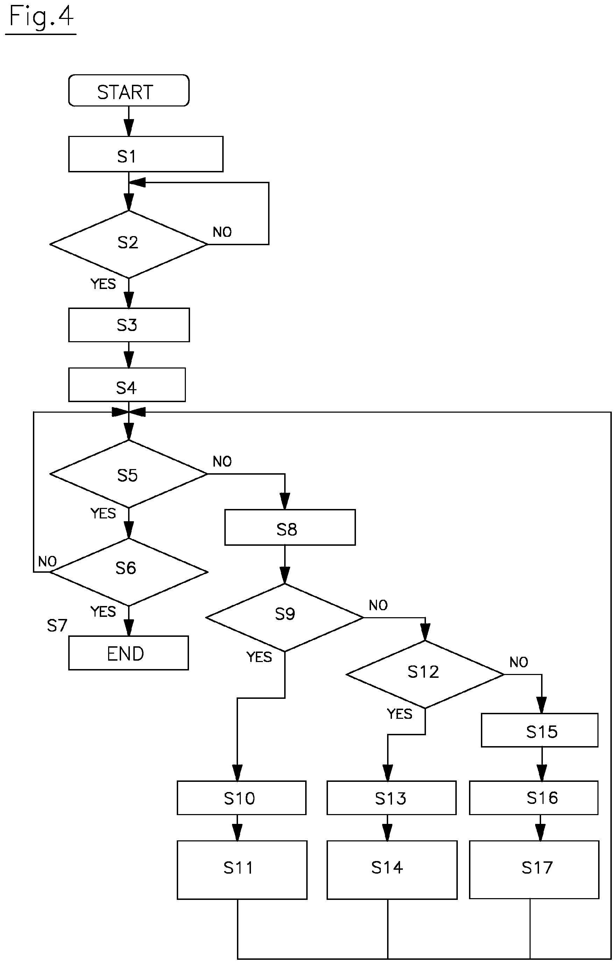

FIG. 4 is a flowchart illustrating an operation of indicating the music desired by a user and reproducing the indicated music in the AVR 1 of this embodiment.

First, the AVR 1 establishes a network connection to the first media server 10, the second media server 20, and the third media server 30 via the LAN 100 and the HUB 2 (Step S1). Next, the control unit 107 monitors whether or not a reproduction instruction signal of the music is output from the operation unit 110 by operating the operation unit 110 by the user (Step S2) . When the reproduction instruction signal of the music is output from the operation unit 110, the control unit 107 controls the input-output unit 101, the music detection unit 102, the music extraction unit 103, and the music information storage unit 108 so that the music information of the music data accumulated in each media server connected through the LAN 100 via the HUB 2 is input and stored in the music information storage unit 108. The input-output unit 101 detects the media server connected to the network via the HUB 2 and the LAN 100 by the control of the control unit 107. The music extraction unit 103 extracts the music information for each media server from among the data regarding the music accumulated in each media server which is detected by the music detection unit 102 and connected to the network. The music information storage unit 108 stores the music information for each media server extracted by the music extraction unit 103 (Step S3) . In this embodiment, the music information for each media server stored by the music extraction unit 103 includes the content as shown in FIG. 3.

The control unit 107 refers to the music information stored in the music information storage unit 108 after the completion of the storing of the music information for each media server by the music information storage unit 108; retrieves the media server accumulated with the music which is instructed to be reproduced by the reproduction instruction signal from the operation unit 110; selects an arbitrary media server, for example, the first media server 10 from among the media servers accumulated with the music which is instructed to be reproduced by the reproduction instruction signal; and controls so as to instruct the input instruction unit 109 to input the music data. The input instruction unit 109 outputs an instruction signal requesting the first media server 10 to transmit the music data based on the control of the control unit 107. The input-output unit 101 requests the first media server 10 to transmit the music data via the HUB 2 and the LAN 100 in response to the request instruction signal of the music data output by the input instruction unit 109.

The first media server 10 transmits the music data requested from among many accumulated music data in response to the request of the music data from the AVR 1. The input-output unit 101 inputs the music data transmitted from the first media server 10. The storage unit 104 stores the music data input to the input-output unit 101 via the music detection unit 102 and the music extraction unit 103. After the music data corresponding to a predetermined fixed time, for example, 10 seconds is stored in the storage unit 104, the reproduction unit 105 starts reproducing the music data stored in the storage unit 104 (Step S4).

The input state detection unit 106 detects an input state of the music data detected by the music detection unit 102 and extracted by the music extraction unit 103 during the start of reproduction of the music data, to thereby monitor a connection state of the network by the LAN 100 and a transmission state of the media server which is inputting the music data being reproduced (Step S5). In Step S5, when the input state of the music data being reproduced is normal, the control unit 107 monitors whether or not the end of the reproduction of the music data being reproduced is instructed from the operation unit 110 and whether or not the music data being reproduced reaches the end (Step S6). When an ending instruction is given to the music data being reproduced or the reproduction of the music reaches the last, the reproduction is terminated (Step S7).

In Step S5, when the input state of the music data becomes abnormal while the music is reproduced, the control unit 107 retrieves the music information for each media server stored in the music information storage unit 108, and retrieves whether or not the music data having the same music name as that of the music data now being reproduced is available in the music data accumulated in the second media server 20 and the third media server 30 which are the media servers other than the first media server 10 which is transmitting the music data now being reproduced (Step S9).

In Step S9, when the music data having the same music name as that of the music data now being reproduced is available in the media server other than the first media server 10, for example, in the second media server 20, the control unit 107 controls so as to instruct the input instruction unit 109 to input the music data having the same music name as that of the music data being reproduced from the second media server 20. The input instruction unit 109 outputs the instruction signal requesting for the transmission of the music data having the same music name as that of the music data being reproduced to the second media server 20 based on the control of the control unit 107. The second media server 20 transmits the requested music data in response to the request of the music data from the AVR 1. The input-output unit 101 inputs the music data transmitted from the second media server 20 (Step S10).

The control unit 107 detects a time code of the music data being reproduced halfway from the first media server 10 and a time code of the same music data as the music newly input and being reproduced from the second media server 20, and switches the music data to be reproduced from the music data from the first media server 10 to the music data from the second media server 20 while controlling so as not to interrupt the reproduction of the music data (Step S11). The procedure returns to Step S5 after the input destination of the music data to be reproduced is switched from the first media server 10 to the second media server 20.

In Step S9, when the music data having the same music name as that of the music data now being reproduced is not available in another media server, the control unit 107 retrieves the music information for each media server stored in the music information storage unit 108, and retrieves whether or not the music data having the same tempo as that of the music data now being reproduced is available in the music data accumulated in the second media server 20 and the third media server 30 which are the media servers other than the first media server 10 which is transmitting the music data now being reproduced (Step S12).

In Step S12, when the music data having the same tempo as that of the music data now being reproduced is available in the media server other than the first media server 10, for example, in the third media server 30, the control unit 107 controls so as to instruct the input instruction unit 109 to input the music data having the same tempo as that of the music data being reproduced from the third media server 30. The input instruction unit 109 outputs the instruction signal requesting for the transmission of the music data having the same music name as that of the music data being reproduced to the third media server 30 based on the control of the control unit 107. The third media server 30 transmits the requested music data in response to the request of the music data from the AVR 1. The input-output unit 101 inputs the music data transmitted from the third media server 30 (Step S13).

The control unit 107 detects a tempo of the music data being reproduced halfway from the first media server 10 and a time code of the music data having the same tempo as that of the music newly input and being reproduced from the third media server 30; and switches the music data to be reproduced from the music data from the first media server 10 to the music data from the third media server 30 by fading-out the reproduced sound of the music data so far being reproduced from the first media server 10 and fading-in the reproduced sound of the music data from the third media server 30 while controlling so as to match the tempo of the music data with the tempo of the music data having the same tempo as that of the music being reproduced (Step S14). The procedure returns to Step S5 after the input destination of the music data to be reproduced is switched from the first media server 10 to the third media server 30.

In Step S12, when the music data having the same tempo as that of the music data now being reproduced is not available in another media server, the control unit 107 retrieves the music information for each media server stored in the music information storage unit 108, and selects the music data similar to the music data now being reproduced from among the music data accumulated in the second media server 20 and the third media server 30 which are the media servers other than the first media server 10 which is transmitting the music data now being reproduced (Step S15). The music data selected here similar to the music data now being reproduced may select, for example, the music having the same artist name as that of the music now being reproduced, for example, from among the music information of the music accumulated in each media server stored in the music information storage unit 108, and may select the music having the same album name as that of the music now being reproduced. Further, when, for example, neither the music having the same artist name as that of the music now being reproduced nor the music having the same album name is available in the music information of the music accumulated in each media server stored in the music information storage unit 108, the music stored in the predetermined media server may be selected.

In Step S13, for example, when the music data having the same artist name as that of the music data stored in the second media server 20 and now being reproduced is available in the media server other than the first media server 10, for example, in the second media server 20, the control unit 107 controls so as to instruct the input instruction unit 109 to input the music data having the same artist name as that of the music data being reproduced from the second media server 20. The input instruction unit 109 outputs the instruction signal requesting for the transmission of the music data having the same artist name as that of the music data being reproduced to the second media server 20 based on the control of the control unit 107. The second media server 20 transmits the requested music data in response to the request of the music data from the AVR 1. The input-output unit 101 inputs the music data transmitted from the second media server 20 (Step S16).

The control unit 107 fades-out the reproduced sound of the music data being reproduced halfway from the first media server 10, and fades-in the reproduced sound of the music data from the second media server 20 after the reproduced sound is completely deadened, thereby switching the music data to be reproduced from the music data from the first media server 10 to the music data from the second media server 20 (Step S17). The procedure returns to Step S5 after the input destination of the music data to be reproduced is switched from the first media server 10 to the second media server 20.

As described above, the network AV receiver device 1 (AVR 1) of this embodiment previously stores in the music information storage unit 108 the music information of the music data accumulated in the first media server 10, the second media server 20, and the third media server 30 which are network-connected via the HUB 2 and the LAN 100, and monitors the input state of the music data from the first media server 10 during reproducing the music data accumulated, for example, in the first media server 10 in response to the reproduction instruction of the music from the user. When the input state of the music data from the first media server 10 is worsened, the network AV receiver device 1 refers to the music information of the second media server 20 and the third media server 30 stored in the music information storage unit 108. First, when the music having the same music name as that of the music now being reproduced is available from among the second media server 20 and the third media server 30, the network AV receiver device 1 switches the media server of the music data to be input so as not to interrupt the music being reproduced by inputting the music data having the same music name. Further, when the music having the same tempo as that of the music now being reproduced is available from among the second media server 20 and the third media server 30 in a case where the music having the same music name as that of the music now being reproduced is not available from among the second media server 20 and the third media server 30, the network AV receiver device 1 switches the media server of the music data of the music being reproduced by inputting the music data having the same tempo. Further, in a case where the music having the same tempo as that of the music now being reproduced is not available from among the second media server 20 and the third media server 30, the network AV receiver device 1 switches the media server of the music data of the music being reproduced by inputting the music similar to the music now being reproduced from among the second media server 20 and the third media server 30.

This can prevent the reproduction of the music from being interrupted halfway even in a case where the network failure or the problem of the server itself occurs in the media server itself which is inputting the music being reproduced and the connection is perpetually suspended from the media server which is inputting the music.

Further, the network AV receiver device 1 (AVR 1) of this invention switches the music data while not interrupting halfway the reproduction of the music data having the same music name when the music data having the same music name as that of the music now being reproduced is available in another media server in a case where the media server to input the music data is switched to another media server, and therefore, the music data being reproduced is not interrupted halfway.

Further, the network AV receiver device 1 (AVR 1) of this invention retrieves the music having the same tempo as that of the music being reproduced in a case where the music data having the same music name as that of the music now being reproduced is not available in another media server, and switches the media server while fading-out the music being reproduced and fading-in the music having the same tempo as that of the music being reproduced by matching the tempo of the music. Therefore, the music being reproduced can be switched without having a sense of strangeness.

Further, the network AV receiver device 1 (AVR 1) of this embodiment retrieves the music similar to the music being reproduced even in a case where the music data having the same tempo as that of the music now being reproduced is not available in another media server, and switches the music data while fading-in the similar music after the music being reproduced is faded out and the reproduced sound is completely deadened. Therefore, the music being reproduced can be switched without having a feeling of strangeness.

While the network AV receiver device 1 (AVR 1) of this embodiment is structured to be network-connected to another media server via the HUB 2 and the LAN 100, other connection structures may be adopted if the network AV receiver device 1 (AVR 1) is connectable to another media server and another device.

While the network AV receiver device 1 (AVR 1) of this embodiment takes the music information of the music data accumulated by each media server stored in the music information storage unit 108 as the music name, the artist name, the album name, and the tempo, the network AV receiver device 1 (AVR 1) may be structured to store other pieces of the music information, for example, various music information such as information of the release date data, information of the sales ranking, and the name of genre, and select the music to be switched while being reproduced based on these pieces of the music information.

While the network AV receiver device 1 (AVR 1) of this embodiment is structured to be network-connected to the first media server 10, the second media server 20, and the third media server 30, the network AV receiver device 1 (AVR 1) may be structured to be further connected to a plurality of media servers or be connected to specific media equipment alone.

### Industrial Applicability

The present invention can be effectively used for the network AV receiver device that reproduces the music recorded in the media server via the network.

## Claims

1. A network AV receiver device (1) for reproducing music recorded in media servers (10, 20, 30) via a network, the network AV receiver device (1) comprising:
a music information storage unit (108) configured to store music information of the music recorded in each media server (10, 20, 30) connected to the network;
an input state detection unit (106) configured to detect an input state of the media server (10) that inputs the music now being reproduced; and
a control unit (107) configured to control an input instruction of the music from the media server,
wherein, when the input state detection unit (106) detects that an input state of music data now being reproduced is not normal, the control unit (107) switches from music data recorded in the media server (10) of the music data now being reproduced to music data recorded in another media server (20, 30) of the media servers based on the music information of the music recorded in each media server stored in the music information storage unit (108), wherein
when the music information indicates that music data having the same music name as that of the music data now being reproduced is available in another media server (20, 30), the control unit (107) switches the music data to music data having the same music name as a music name of the music data now being reproduced;
and **characterised in that**
when the music information indicates that music data having the same music name as that of the music data now being reproduced is not available in another media server (20, 30), and music data having the same tempo as that of the music data now being reproduced is available in another server (20, 30), the control unit (107) switches the music data to music data having the same tempo as a tempo of the music data now being reproduced.

2. A network AV receiver device (1) according to claim 1 wherein:
when the music information indicates that music data having the same music name as that of the music data now being reproduced is not available in another media server (20, 30) and indicates that music data having the same tempo as that of the music data now being reproduced is not available in another media server (20, 30), the control unit (107) selects music data based on the stored music information indicating that music data is available on another media server (20, 30) having at least one of the artist name, the album name, the release date data, information of the sales ranking, and the name of genre which is the same as the music data being reproduced.

3. A network AV receiver device (1) according to claim 1 or claim 2, wherein the control unit (107) is configured to switch the music data to prevent the reproduction of the music data from being interrupted halfway based on a time code of the music data now being reproduced and a time code of the music data having the same music name as the music name of the music being reproduced.

4. A network AV receiver device (1) according to claim 1, wherein the control unit (107) is configured to switch the music data while controlling to fade-out the music now being reproduced and fade-in the music having the same tempo as the tempo of the music being reproduced by matching the tempo of the music data being reproduced and the tempo of the music data having the same tempo as the tempo of the music being reproduced based on the tempo of the music data now being reproduced and the tempo of the music data having the same tempo as the tempo of the music being reproduced.

## Patentansprüche

1. Netzwerk-AV-Empfängervorrichtung (1) zur Wiedergabe von Musik, die in Medienservern (10, 20, 30) aufgezeichnet ist, über ein Netzwerk, wobei die Netzwerk-AV-Empfängervorrichtung (1) Folgendes umfasst:
eine Musikinformationsspeichereinheit (108), die konfiguriert ist, um Musikinformationen der Musik, die in jedem mit dem Netzwerk verbundenen Medienserver (10, 20, 30) aufgezeichnet ist, zu speichern;
eine Eingabestatusdetektionseinheit (106), die konfiguriert ist, um einen Eingabestatus des Medienservers (10) zu detektieren, der die Musik eingibt, die gegenwärtig wiedergegeben wird; und
eine Steuerungseinheit (107), die konfiguriert ist, um einen Eingabebefehl der Musik vom Medienserver zu steuern,
wobei, wenn die Eingabestatusdetektionseinheit (106) detektiert, dass ein Eingabestatus von Musikdaten, die gegenwärtig wiedergegeben werden, nicht normal ist, die Steuerungseinheit (107) von Musikdaten, die im Medienserver (10) der Musikdaten, die gegenwärtig wiedergegeben werden, gespeichert sind, auf Musikdaten, die in einem weiteren Medienserver (20, 30) der Medienserver aufgezeichnet sind, umschaltet, basierend auf den Musikinformationen der Musik, die in jedem Medienserver aufgezeichnet ist, der in der Musikinformationsspeichereinheit (108) gespeichert ist, wobei
wenn die Musikinformationen anzeigen, dass Musikdaten, die denselben Musiknamen aufweisen wie jenen der Musikdaten, die gegenwärtig wiedergegeben werden, in einem weiteren Medienserver (20, 30) verfügbar sind, die Steuerungseinheit (107) die Musikdaten auf Musikdaten, die denselben Musiknamen aufweisen wie ein Musikname der Musikdaten, die gegenwärtig wiedergeben werden, umschaltet;
und **dadurch gekennzeichnet, dass**
wenn die Musikinformationen anzeigen, dass Musikdaten, die denselben Musiknamen aufweisen wie jenen der Musikdaten, die gegenwärtig wiedergegeben werden, nicht in einem weiteren Medienserver (20, 30) verfügbar sind, und Musikdaten, die dasselbe Tempo aufweisen wie die Musikdaten, die gegenwärtig wiedergegeben werden, auf einem weiteren Server (20, 30) verfügbar sind, die Steuerungseinheit (107) von den Musikdaten auf Musikdaten, die dasselbe Tempo wie das Tempo der Musikdaten, die gegenwärtig wiedergegeben werden, aufweisen, umschaltet.

2. Netzwerk-AV-Empfängervorrichtung (1) nach Anspruch 1, wobei:
wenn die Musikinformationen anzeigen, dass die Musikdaten mit dem gleichen Musiknamen wie jene der Musikdaten, die gegenwärtig wiedergegeben werden, nicht in einem weiteren Server (20, 30) verfügbar sind, und anzeigen, dass Musikdaten mit demselben Tempo wie jenes der Musikdaten, die gegenwärtig wiedergegeben werden, nicht in einem weiteren Server (20, 30) verfügbar sind, die Steuerungseinheit (107) Musikdaten basierend auf den gespeicherten Musikinformationen auswählt, die anzeigen, dass Musikdaten auf einem weiteren Medienserver (20, 30) verfügbar sind, die zumindest eines von Künstlername, Albumname, Erscheinungsdatumsdaten, Informationen bezüglich des Verkaufsrankings und Name des Genres aufweisen, der/die derselbe/dieselbe wie die Musikdaten ist, die wiedergegeben werden.

3. Netzwerk-AV-Empfängervorrichtung (1) nach Anspruch 1 oder Anspruch 2, wobei die Steuerungseinheit (107) konfiguriert ist, um die Musikdaten umzuschalten, um zu verhindern, dass die Wiederhabe der Musikdaten basierend auf einem Zeitcode der Musikdaten, die gegenwärtig wiedergegeben werden, und einem Zeitcode der Musikdaten, die denselben Musiknamen wie den Musiknamen der Musik, die wiedergegeben wird, aufweisen, zwischendurch unterbrochen wird.

4. Netzwerk-AV-Empfängervorrichtung (1) nach Anspruch 1, wobei die Steuerungseinheit (107) konfiguriert ist, um die Musikdaten umzuschalten, während gesteuert wird, dass die Musik, die gegenwärtig wiedergegeben wird, langsam ausgeblendet wird, und die Musik, die dasselbe Tempo wie das Tempo der Musik, die wiedergegeben wird, aufweist, eingeblendet wird, indem das Tempo der Musikdaten, die wiedergegeben werden, und das Tempo der Musikdaten, die dasselbe Tempo wie das Tempo der Musik, die wiedergegeben wird, aufweisen, basierend auf dem Tempo der Musikdaten, die gegenwärtig wiedergegeben werden, und dem Tempo der Musikdaten, die dasselbe Tempo wie das Tempo der Musik, die wiedergegeben wird, aufweisen, abgeglichen wird.

## Revendications

1. Dispositif récepteur audiovisuel, AV, de réseau (1) destiné à reproduire de la musique enregistrée dans des serveurs multimédias (10, 20, 30) par l'intermédiaire d'un réseau, le dispositif récepteur AV de réseau (1) comprenant :
une unité de stockage d'informations musicales (108) configurée de manière à stocker des informations musicales de la musique enregistrée dans chaque serveur multimédia (10, 20, 30) connecté au réseau ;
une unité de détection d'état d'entrée (106) configurée de manière à détecter un état d'entrée du serveur multimédia (10) qui applique en entrée la musique en cours de reproduction ; et
une unité de commande (107) configurée de manière à commander une instruction d'entrée de la musique à partir du serveur multimédia ;
dans lequel, lorsque l'unité de détection d'état d'entrée (106) détecte qu'un état d'entrée de données musicales en cours de reproduction n'est pas normal, l'unité de commande (107) permute entre des données musicales enregistrées dans le serveur multimédia (10) des données musicales en cours de reproduction et des données musicales enregistrées dans un autre serveur multimédia (20, 30) parmi les serveurs multimédias, sur la base des informations musicales de la musique enregistrée dans chaque serveur multimédia, stockées dans l'unité de stockage d'informations musicales (108), dans lequel
lorsque les informations musicales indiquent que des données musicales, qui présentent le même nom de musique que celui des données musicales en cours de reproduction, sont disponibles dans un autre serveur multimédia (20, 30), l'unité de commande (107) commute les données musicales en des données musicales présentant le même nom de musique qu'un nom de musique des données musicales en cours de reproduction ; et
**caractérisé en ce que**,
lorsque les informations musicales indiquent que des données musicales présentant le même nom de musique que celui des données musicales en cours de reproduction ne sont pas disponibles dans un autre serveur multimédia (20, 30), et que des données musicales présentant le même tempo que celui des données musicales en cours de reproduction sont disponibles dans un autre serveur (20, 30), l'unité de commande (107) commute les données musicales en des données musicales présentant le même tempo qu'un tempo des données musicales en cours de reproduction.

2. Dispositif récepteur AV de réseau (1) selon la revendication 1, dans lequel :
lorsque les informations musicales indiquent que des données musicales présentant le même nom de musique que celui des données musicales en cours de reproduction ne sont pas disponibles dans un autre serveur multimédia (20, 30), et indiquent que des données musicales présentant le même tempo que celui des données musicales en cours de reproduction ne sont pas disponibles dans un autre serveur multimédia (20, 30), l'unité de commande (107) sélectionne des données musicales sur la base des informations musicales stockées indiquant que des données musicales sont disponibles sur un autre serveur multimédia (20, 30) présentant au moins l'un des attributs parmi le nom d'artiste, le nom d'album, les données de date de sortie, des informations sur le classement des ventes, et le nom de genre, qui est le même que les données musicales en cours de reproduction.

3. Dispositif récepteur AV de réseau (1) selon la revendication 1 ou 2, dans lequel l'unité de commande (107) est configurée de manière à commuter les données musicales afin d'empêcher que la reproduction des données musicales soit interrompue à mi-chemin sur la base d'un code temporel des données musicales en cours de reproduction et d'un code temporel des données musicales présentant le même nom de musique que le nom de musique de la musique en cours de reproduction.

4. Dispositif récepteur AV de réseau (1) selon la revendication 1, dans lequel l'unité de commande (107) est configurée de manière à commuter les données musicales tout en commandant la fermeture en fondu de la musique en cours de reproduction et l'ouverture en fondu de la musique présentant le même tempo que le tempo de la musique en cours de reproduction, en faisant correspondre le tempo des données musicales en cours de reproduction et le tempo des données musicales présentant le même tempo que le tempo de la musique en cours de reproduction, sur la base du tempo des données musicales en cours de reproduction et du tempo des données musicales présentant le même tempo que le tempo de la musique en cours de reproduction.
